# EUROPÄISCHE PATENTSCHRIFT

(11) **EP 0 407 871 B1**
(45) Veröffentlichungstag und Bekanntmachung des Hinweises auf die Patenterteilung: **02.02.1994**
(21) Anmeldenummer: 90112735.7
(22) Anmeldetag: 04.07.1990
(51) Int. Cl.: C09B 62/513, D06P 1/384

(54) **Wasserlösliche Disazoverbindungen, Verfahren zu ihrer Herstellung und ihre Verwendung als Farbstoffe**
Water soluble disazo compounds, process for their preparation and their use as dyestuffs
Composés disazo solubles dans l'eau, procédé pour leur préparation et leur emploi comme colorants

(30) Priorität: 08.07.1989 DE 3922503
(43) Veröffentlichungstag der Anmeldung: 16.01.1991
(73) Patentinhaber: HOECHST AKTIENGESELLSCHAFT, 65926 Frankfurt am Main (DE)
(72) Erfinder: Springer, Hartmut, Dr., D-6240 Königstein/Taunus (DE); Gleissner, Rolf, Dr., D-6000 Frankfurt am Main (DE); Meier, Michael, Dr., D-6000 Frankfurt am Main (DE)

(56) Entgegenhaltungen:
- EP-A- 0 174 909
- EP-A- 0 221 013

## Beschreibung

Die Erfindung liegt auf dem technischen Gebiet der faserreaktiven Farbstoffe.

Faserreaktive Disazoverbindungen mit Farbstoffeigenschaften, die beispielsweise Cellulosefasermaterialien in marineblauen Tönen zu färben vermögen, sind beispielsweise aus den europäischen Patentanmeldungs-Veröffentlichungen Nrs. 0 133 283A, 0 174 909A und 0 282 443A bekannt. Gestiegene Anforderungen an die Qualität der Färbungen und an die Wirtschaftlichkeit des Färbeprozesses haben es jedoch erforderlich gemacht, verbesserte Farbstoffe zu entwickeln. Denn gerade zum Färben von Cellulosefasermaterialien, wie Baumwolle, nach den Klotz-Kaltverweil-Verfahren werden Farbstoffe benötigt, die gut löslich sind und die bei den niedrigen Färbe- und Fixiertemperaturen eine hohe Reaktivität aufweisen. Sie sollen einen hohen Fixiergrad besitzen, um sowohl ökonomisch als auch ökologisch mit hohem Vorteil in die Färbeprozesse eingesetzt werden zu können. Darüberhinaus sollen die Farbstoffe Färbungen mit guten Echtheitseigenschaften, wie beispielsweise mit guten Naßechtheiten und Lichtechtheiten, liefern.

Mit der nachstehend beschriebenen Erfindung wurde diese Aufgabe gelöst.

Gegenstand der Erfindung sind wasserlösliche Disazoverbindungen entsprechend der allgemeinen Formel (1) 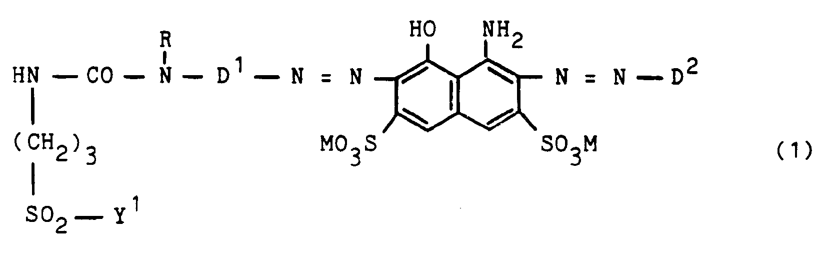
in welcher bedeuten:
- D¹: ist ein Phenylenrest, der durch 1 oder 2 Substituenten aus der Gruppe Alkyl von 1 bis 4 C-Atomen, wie Methyl, Alkoxy von 1 bis 4 C-Atomen, wie Methoxy und Ethoxy, Chlor, Carboxy und Sulfo substituiert sein kann, oder ist ein Naphthylenrest, wobei an den Naphthylenrest die Azogruppe bevorzugt in 1- oder 2-Stellung und die Ureidogruppierung bevorzugt in 4-Stellung gebunden ist und der Naphthylenrest durch eine Sulfogruppe substituiert sein kann;
- R: ist ein Wasserstoffatom oder eine Alkylgruppe von 1 bis 4 C-Atomen, wie die Methyl- oder Ethylgruppe, die durch 1 oder 2, bevorzugt 1, Substituenten aus der Gruppe Hydroxy, Sulfo, Carboxy, Sulfato und Phosphato substituiert sein kann, bevorzugt jedoch die Methylgruppe und insbesondere ein Wasserstoffatom;
- Y¹: ist die Vinylgruppe oder eine Ethylgruppe, die in β-Stellung einen Substituenten enthält, der durch Alkali unter Bildung der Vinylgruppe eliminierbar ist;
- M: ist ein Wasserstoffatom oder ein Alkalimetall, wie Natrium, Kalium und Lithium;
- D²: ist eine Gruppe der allgemeinen Formel (2a), (2b) oder (2c)

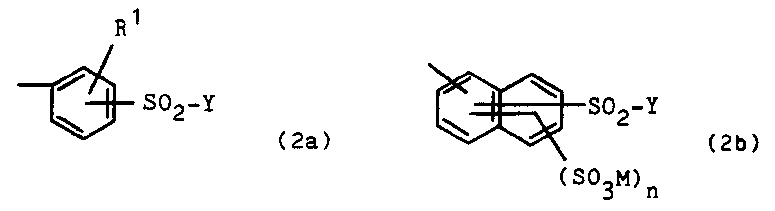

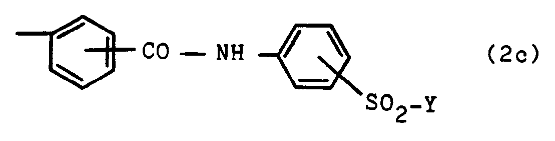

in welchen
- R¹: ein Wasserstoffatom, die Cyangruppe, eine Alkylgruppe von 1 bis 4 C-Atomen, wie die Methyl- oder Ethylgruppe, ist, oder eine durch eine Sulfo-, Carboxy- oder Sulfatogruppe substituierte Alkylgruppe von 1 bis 4 C-Atomen oder eine Hydroxygruppe, eine Alkoxygruppe von 1 bis 4 C-Atomen, wie die Methoxy- oder Ethoxygruppe, oder eine durch eine Sulfo-, Carboxy- oder Sulfatogruppe substituierte Alkoxygruppe von 1 bis 4 C-Atomen oder eine Sulfo- oder Carboxygruppe oder ein Halogenatom, wie ein Brom- oder Chloratom, ist,
- Y: die Vinylgruppe oder eine Ethylgruppe ist, die in β-Stellung einen Substituenten enthält, der durch Alkali unter Bildung der Vinylgruppe eliminierbar ist,
- n: für die Zahl Null oder 1 steht (wobei im Falle von n gleich Null diese Gruppe ein Wasserstoffatom bedeutet) und
- M: die obengenannte Bedeutung besitzt.

Die einzelnen Formelglieder der allgemeinen Formel (1) können zueinander gleiche oder voneinander verschiedene Bedeutungen besitzen.

Insbesondere bevorzugt ist in Formel (1) D¹ die 1,3- oder 1,4-Phenylengruppe, die durch eine Carboxy- oder bevorzugt 1 oder 2, bevorzugt 1, Sulfogruppen substituiert sein kann.

Bevorzugt ist R¹ die Methyl-, Methoxy-, Ethoxy-, Carboxy-oder Sulfogruppe und insbesondere bevorzugt ein Wasserstoffatom. Im Formelrest (2a) steht die Gruppe -SO₂-Y bevorzugt in meta- und insbesondere in para-Stellung zur mit der Azogruppe verbundenen freien Bindung.

Alkalisch eliminierbare, in β-stellung der Ethylgruppe der Formelglieder Y¹ und Y stehende Substituenten sind beispielsweise Alkanoyloxygruppen von 2 bis 5 C-Atomen, wie die Acetyloxygruppe, Aroyloxygruppen, wie die Benzoyloxy-, Sulfobenzoyloxy- oder Carboxybenzoyloxy-Gruppe, die Alkylaminogruppen mit Alkylresten von 1 bis 4 C-Atomen, wie insbesondere die Dimethylamino- und Diethylaminogruppe, Trialkylammoniumgruppen mit Alkylresten mit 1 bis 4 C-Atomen, wie die Trimethylammoniumgruppe, das Chloratom, das Bromatom, Alkylsulfonyloxygruppen von 1 bis 4 C-Atomen, wie die Methylsulfonyloxygruppe, und insbesondere eine Phosphato-, Thiosulfato- und Sulfatogruppe. Bevorzugt sind Y und Y¹ unabhängig voneinander die Vinylgruppe, die β-Chlorethyl-, β-Thiosulfatoethyl- und die β-Sulfatoethyl-Gruppe. Insbesondere ist Y bevorzugt die β-Sulfatoethyl-Gruppe und Y¹ die β-Chlorethyl-, β-Sulfatoethyl- oder β-Thiosulfatoethyl-Gruppe.

Von den erfindungsgemäßen Disazoverbindungen der allgemeinen Formel (1) sind insbesondere solche hervorzuheben, die der allgemeinen Formel (1a) 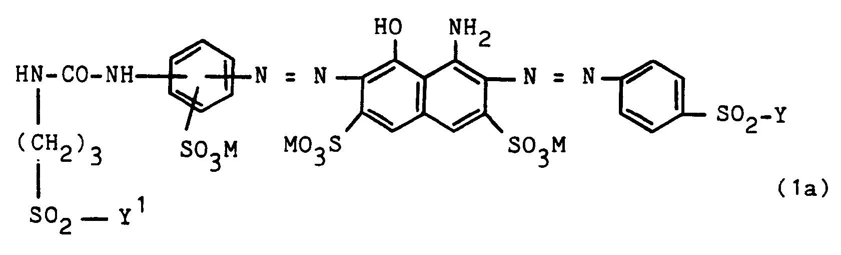
entsprechen, in welchen M, Y¹ und Y die obengenannten, insbesondere bevorzugten Bedeutungen haben.

Die Substituenten "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel -SO₃M , Carboxygruppen Gruppen entsprechend der allgemeinen Formel -COOM , Phosphatogruppen Gruppen entsprechend der allgemeinen Formel -OPO₃M₂, Thiosulfatogruppen Gruppen entsprechend der allgemeinen Formel -S-SO₃M und Sulfatogruppen Gruppen entsprechend der allgemeinen Formel -OSO₃M , jeweils mit M der obengenannten Bedeutung.

Die vorliegende Erfindung betrifft weiterhin Verfahren zur Herstellung der Disazoverbindungen der allgemeinen Formel (1). Sie sind dadurch gekennzeichnet, daß man eine Verbindung der allgemeinen Formel (3) 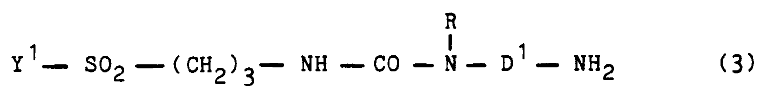
in welcher Y¹, R und D¹ die obengenannten Bedeutungen haben, diazotiert und mit einer Verbindung der allgemeinen Formel (4) 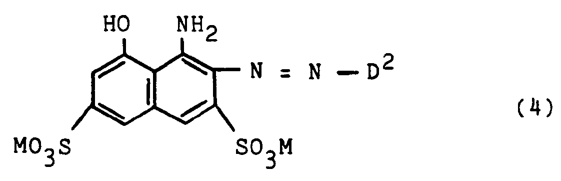
in welcher M und D² die obengenannten Bedeutungen haben, kuppelt,
oder daß man eine Verbindung der allgemeinen Formel (5) 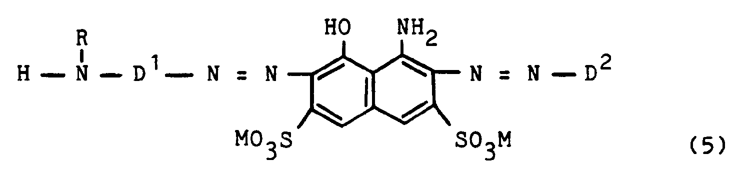
in welcher R, D¹, M und D² die obengenannten Bedeutungen haben, mit einer Isocyanatverbindung der allgemeinen Formel (6)

Y¹ - SO₂ - (CH₂)₃ - NCO (6)

in welcher Y¹ die obengennante Bedeutung besitzt, umsetzt.

Die erfindungsgemäße Diazotierungs- und Kupplungsreaktion erfolgt analog bekannten Verfahrensweisen der Diazotierung und Kupplung, so insbesondere in wäßrigem Medium, wobei die Diazotierung bspw. mittels salpetriger Säure (bspw. mittels Natriumnitrit in wäßrig-mineralsaurer, wie salz- oder schwefelsaurer Lösung) bei einer Temperatur von -5°C bis +15°C und bei einem pH-Wert von unterhalb 2 und die Kupplungsreaktion bspw. bei einer Temperatur zwischen 5 und 40°C, bevorzugt zwischen 10 und 25°C, und bei einem pH-Wert zwischen 3,5 und 7,5, bevorzugt zwischen 4 und 7, durchgeführt wird.

Die erfindungsgemäße Umsetzung der Amino-Disazoverbindung der allgemeinen Formel (5) mit dem Isocyanat der allgemeinen Formel (6) erfolgt ebenfalls analog allgemein bekannten Verfahrensbedingungen, wie sie für die Umsetzung von Aminoverbindungen mit Isocyanaten beschrieben sind (s. Houben-Weyl, Methoden der Organischen Chemie, Band 8 (1952), Seiten 149-163, G. Thieme-Verlag, Stuttgart, und dessen 4. Ergänzungswerk (1983), Seiten 334-342 und 352-357). Insbesondere erfolgt die erfindungsgemäße Umsetzung in der Weise, daß man eine Lösung des Isocyanats der allgemeinen Formel (6) mit Y¹ der obengenannten Bedeutung, wobei Y¹ bevorzugt β-Chlorethyl ist, in einem organischen Lösemittel, bevorzugt Chlorbenzol, mit einer wäßrigen Lösung der Verbindung (5) unter Einhaltung eines pH-Wertes zwischen 5 und 9 und einer Temperatur zwischen 0 und 70°C, bevorzugt zwischen 15 und 30°C, miteinander verrührt oder zur Reaktion auf eine andere, übliche Art zusammenbringt.

Die Ausgangsverbindungen entsprechend der allgemeinen Formel (3) lassen sich gemäß bekannten Verfahrensweisen (Houben-Weyl, loc. cit.) durch Umsetzung eines Amins der allgemeinen Formel HN(R)-D¹-NH₂ mit R und D¹ der obengenannten Bedeutung mit einem Isocyanat entsprechend der allgemeinen Formel (6), in welcher Y¹ die obengenannte Bedeutung hat, bevorzugt β-Chlorethyl ist, herstellen. Die Ausgangsverbindungen der allgemeinen Formel (6) erhält man ebenfalls analog bekannten Verfahrensweisen durch Umsetzung eines Amins der Formel H₂N-(CH₂)₃-SO₂-Y¹ mit Y¹ der obigen Bedeutung, wie bspw. γ-(β'-Chlorethylsulfonyl)-propylamin, das aus der deutschen Offenlegungsschrift Nr. 2 040 620 bekannt ist, mit Phosgen.

Die Ausgangsverbindungen der allgemeinen Formel (4) und (5) sind in der Patentliteratur zahlreich beschrieben. Sie lassen sich beispielsweise durch Kupplung von 3,6-Disulfo-1-amino-8-naphthol in stark saurem Medium mit dem Diazoniumsalz des Amins der Formel D²-NH₂ und gegebenenfalls anschließender Kupplungsreaktion mit dem Diazoniumsalz des Amins der Formel HN(R)-D¹-NH₂ im schwach sauren bis neutralen, gegebenenfalls bis schwach alkalischen, Bereich herstellen.

Ausgangsverbindungen der allgemeinen Formel HN(R)-D¹-NH₂ sind beispielsweise 4-Sulfo-1,3-diaminobenzol, 2-Sulfo-1,4-diaminobenzol, 2,5-Disulfo-1,4-diaminobenzol, 4,6-Disulfo-1,3-diaminobenzol, 4-Carboxy-1,3-diaminobenzol und 4-Methyl-1,3-diaminobenzol.

Ausgangsverbindungen der allgemeinen Formel D²-NH₂ sind beispielsweise 4-(β-Sulfatoethylsulfonyl)-anilin, 3-(β-Sulfatoethylsulfonyl)-anilin, 4-(β-Thiosulfatoethylsulfonyl)-anilin, 8-(β-Sulfatoethylsulfonyl)-6-sulfo-2-aminonaphthalin und 6-(β-Sulfatoethylsulfonyl)-8-sulfo-2-aminonaphthalin.

Sowohl die erfindungsgemäßen Disazoverbindungen der allgemeinen Formel (1) als auch die erfindungsgemäß verwendeten Ausgangsverbindungen der allgemeinen Formel (3) können bezüglich ihrer faserreaktiven Reste -SO₂-Y bzw. -SO₂-Y¹ analog bekannten Verfahrensweisen in Verbindungen mit ansonsten gleicher Konstitution, jedoch mit einer Gruppierung, in welchen Y bzw. Y¹ eine andere Gruppe darstellt, übergeführt werden, so beispielsweise ausgehend von den Verbindungen mit einer β-Sulfatoethylsulfonyl- oder β-Chlorethylsulfonyl-Gruppe in solche, in welchen Y und Y¹ die Vinylgruppe bedeuten, und ausgehend von Verbindungen mit der β-Chlorethylsulfonyl- oder der Vinylsulfonyl-Gruppe in solche, in welchen Y und Y¹ die β-Thiosulfatoethylsulfonyl-Gruppe bedeuten. So lassen sich beispielsweise die Vinylsulfonyl-Verbindungen aus ihren entsprechenden β-Chlorethylsulfonyl-Verbindungen oder ihren Verbindungen, in welchen Y oder Y¹ die Ethylgruppe ist, die in β-Stellung die Estergruppe einer organischen oder anorganischen Säure als Substituenten enthält, wie beispielsweise die Sulfato- oder die Acetyloxygruppe, in der Weise herstellen, daß man ein Alkali in wäßrigem Medium bei einem pH-Wert zwischen 10 und 12 und bei einer Temperatur zwischen 20 und 50°C, abhängig von der Temperatur, während 10 Minuten bis 3 Stunden auf diese Verbindungen einwirken läßt, so bspw. bei einer Temperatur von 50°C während 10 bis 20 Minuten oder bei einer Temperatur von 25°C während zwei bis drei Stunden, und aus der β-Chlorethylsulfonyl-Verbindung oder der Vinylsulfonyl-Verbindung läßt sich bei einem pH-Wert zwischen 4 und 9 und einer Temperatur zwischen 20 und 60°C durch Umsetzung mit Natriumthiosulfat die entsprechende β-Thiosulfatoethylsulfonyl-Verbindung herstellen.

Die Abscheidung und Isolierung der erfindungsgemäß hergestellten Disazoverbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei der Syntheselösung eine Puffersubstanz zugefügt werden kann.

Die erfindungsgemäßen Disazoverbindungen der allgemeinen Formel (1) - im nachfolgenden Verbindungen (1) genannt - haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Fasermaterialien verwendet werden. Auch können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen (1) zum Färben (einschließlich Bedrucken) von hydroxy- und/oder carbonamidgruppenhaltigen Fasermaterialien bzw. Verfahren zu deren Anwendung auf diesen Substraten. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten Substraten nach den für wasserlösliche Farbstoffe, insbesondere faserreaktive Farbstoffe, bekannten Anwendungstechniken applizieren und fixieren, so beispielsweise, indem man die Verbindung (1) in gelöster Form auf das Substrat aufbringt oder sie darin einbringt und sie auf diesem oder in diesem, gegebenenfalls durch Hitzeeinwirkung und/oder durch Einwirkung eines alkalisch wirkenden Mittels, fixiert. Solche Färbe- und Fixierweisen sind sowohl in der Fachliteratur als auch in der Patentliteratur zahlreich beschrieben, wie beispielsweise in der Europäischen Patentanmeldungs-Veröffentlichung Nr. 0 181 585A. Wegen ihrer guten Wasserlöslichkeit eignen sie sich auch besonders für das Klotz-Kaltverweil-Verfahren.

Mit den Verbindungen (1) werden sowohl auf carbonamidgruppenhaltigen Materialien, wie insbesondere auf Wolle, als auch auf hydroxygruppenhaltigem Material, wie insbesondere Cellulosefasermaterial, marineblaue Färbungen und Drucke mit guten Echtheitseigenschaften, wie guten Plissier-, Bügel- und Reibechtheiten und insbesondere einer guten Lichtechtheit und guten Naßechtheitseigenschaften, von denen insbesondere die Schweißechtheiten hervorgehoben werden können, erhalten.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.
Das im sichtbaren Bereich angegebene Absorptionsmaximum (λₘₐₓ-Wert) wurde aus wäßriger Lösung des Alkalimetallsalzes bestimmt.

### Beispiel A

In eine auf 100°C erwärmte Suspension von 111 Teilen γ-(β'-Chlorethylsulfonyl)-propylamin-hydrochlorid in 500 Volumenteilen Chlorbenzol werden innerhalb von 6 bis 8 Stunden 125 Teile Phosgen eingeleitet. Man rührt den Ansatz noch zwei Stunden nach und entfernt sodann überschüssiges Phosgen durch Ausblasen mit Stickstoff. Man erhält eine schwach gelbliche Lösung des γ-(β'-Chlorethylsulfonyl)-propylisocyanats, die direkt als Ausgangsverbindung für die Synthese der erfindungsgemäßen Disazoverbindungen eingesetzt werden kann.

Das γ-(β'-Chlorethylsulfonyl)-propylisocyanat ist bisher in der Literatur noch nicht beschrieben. Es besitzt im IR-Spektrum eine NCO-Bande bei 2282 cm⁻¹. Zur Charakterisierung kann ein kleiner Teil der Isocyanatlösung mit Anilin verrührt werden. Es scheidet sich nach kurzer Zeit der N-[γ-(β'-Chlorethylsulfonyl)-propyl]-N'-phenyl-harnstoff ab, der nach Umkristallisation aus Ethanol einen Schmelzpunkt von 140 bis 142°C besitzt.
Die Elementaranalyse ergab folgende Werte:
- ber.:: C 47,3 %, H 5,6 %, N 9,2 %, S 10,5 %,
- gef.:: C 47,6 %, H 5,7 %, N 9,3 %, S 9,8 %.

Die Struktur wurde zudem durch NMR-Spektroskopie bestätigt.

### Beispiel B

220 Teile einer wäßrigen Lösung von 19 Teilen 4-Sulfo-1,3-diaminobenzol versetzt man bei einem pH-Wert von 4,5 und einer Temperatur von 20 bis 25°C unter kräftigem Rühren mit einem Viertel der in Beispiel A hergestellten Isocyanatlösung. Nach einer Reaktionszeit von vier bis fünf Stunden ist die Umsetzung beendet. Man trennt die organische Phase ab. Zur Charakterisierung der hergestellten Ureidoverbindung kann ein Teil der wäßrigen Phase entnommen werden; er wird auf einen pH-Wert von 1,5 gestellt, einige Stunden gerührt, und die abgeschiedene Verbindung N-[γ-(β'-Chlorethylsulfonyl)-propyl]-N'- (3-amino-4-sulfophenyl)-harnstoff wird isoliert. Ihre Struktur wurde durch ¹H-NMR-Spektroskopie und durch die Elementaranalyse bestätigt.

Elementaranalyse:
- ber.:: C 36,0 %, H 4,5 %, N 10,5 %, Cl 8,9 %,
- gef.:: C 35,9 %, H 4,6 %, N 10,1 %, Cl 9,2 % .

### Beispiel 1

Zur Herstellung einer erfindungsgemäßen Disazoverbindung versetzt man die wäßrige Lösung der unter Beispiel B hergestellten Harnstoffverbindung mit 20 Teilen einer wäßrigen 5n-Natriumnitritlösung und gießt die Mischung unter gutem Rühren langsam in ein Gemisch aus 200 Teilen Eis, 100 Teilen Wasser und 40 Teilen einer wäßrigen konzentrierten Salzsäure. Die Diazotierungsreaktion ist nach etwa 2 Stunden beendet. Sodann gibt man 58 Teile der Verbindung 2-[4'-(β-Sulfatoethylsulfonyl)-phenylazo]-3,6-disulfo-1-amino-8-naphthol hinzu und führt die Kupplungsreaktion bei einem pH-Wert von 4,5 und einer Temperatur von 20°C durch.

Die erhaltene erfindungsgemäße Disazoverbindung, die (in Form der freien Säure geschrieben) der Formel 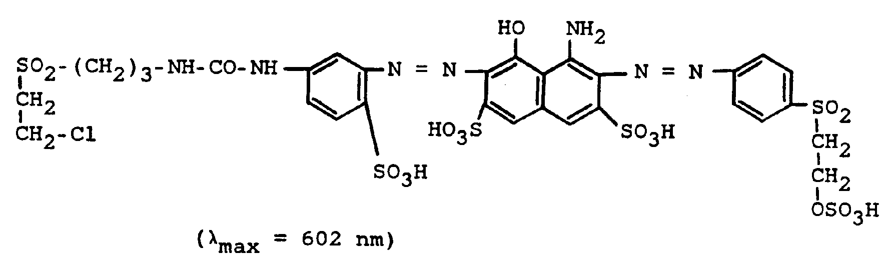
entspricht, in welcher die Sulfogruppe im Benzolrest vorwiegend in ortho-Stellung zur Azogruppe gebunden steht (bei der Umsetzung der Isocyanatausgangsverbindung wird teilweise das Isomere Harnstoffderivat gebildet), wird aus der zuvor geklärten Syntheselösung durch Eindampfen oder durch Sprühtrocknung als Alkalimetallsalz (Natriumsalz) isoliert.

Die erfindungsgemäße Disazoverbindung besitzt sehr gute faserreaktive Farbstoffeigenschaften und liefert auf den in der Beschreibung genannten Materialien, wie insbesondere Cellulosefasermaterialien, nach den in der Technik für faserreaktive Farbstoffe üblichen Applikations- und Fixierverfahren marineblaue Färbungen und Drucke mit guten Echtheitseigenschaften, von denen insbesondere die guten Licht-, Naßlicht- und Waschechtheiten hervorgehoben werden können. Die erfindungsgemäße Disazoverbindung zeichnet sich durch einen hohen Fixiergrad aus.

### Beispiel 2

Zur Herstellung einer erfindungsgemäßen Disazoverbindung verfährt man gemäß der Verfahrensweise des Beispieles 1, ersetzt jedoch die dort verwendete Ausgangsverbindung 2-Sulfo-1,3-diaminobenzol durch die gleiche Menge an 2-Sulfo-1,4-diaminobenzol. Man erhält das Alkalimetallsalz der Verbindung entsprechend der Formel 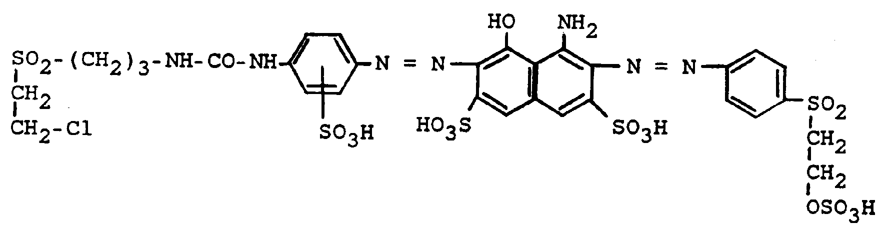
das sehr gute faserreaktive Farbstoffeigenschaften besitzt und marineblaue Färbungen und Drucke mit hohem Fixiergrad mit den für die erfindungsgemäße Disazoverbindung des Beispieles 1 angegebenen guten Echtheitseigenschaften liefert.

## Patentansprüche (Patentansprüche für folgende(n) Vertragsstaat(en): BE, CH, DE, FR, GB, IT, LI)

1. Eine Disazoverbindung entsprechend der allgemeinen Formel (1) 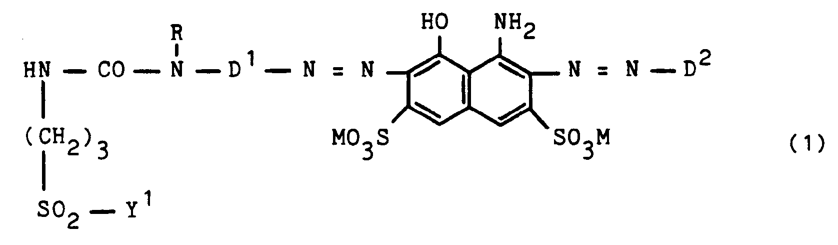 in welcher bedeuten:
D¹ ist ein Phenylenrest, der durch 1 oder 2 Substituenten aus der Gruppe Alkyl von 1 bis 4 C-Atomen, Alkoxy von 1 bis 4 C-Atomen, Chlor, Carboxy und Sulfo substituiert sein kann, oder ist ein Naphthylenrest, der durch eine Sulfogruppe substituiert sein kann;
R ist ein Wasserstoffatom oder eine Alkylgruppe von 1 bis 4 C-Atomen, die durch 1 oder 2 Substituenten aus der Gruppe Hydroxy, Sulfo, Carboxy, Sulfato und Phosphato substituiert sein kann;
Y¹ ist die Vinylgruppe oder eine Ethylgruppe, die in β-Stellung einen Substituenten enthält, der durch Alkali unter Bildung der Vinylgruppe eliminierbar ist;
M ist ein Wasserstoffatom oder ein Alkalimetall;
D² ist eine Gruppe der allgemeinen Formel (2a), (2b) oder (2c) 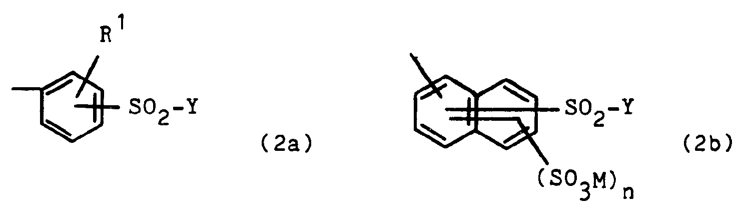 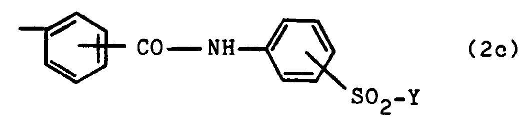
in welchen
R¹ ein Wasserstoffatom, die Cyangruppe, eine Alkylgruppe von 1 bis 4 C-Atomen oder eine durch eine Sulfo-, Carboxy- oder Sulfatogruppe substituierte Alkylgruppe von 1 bis 4 C-Atomen oder eine Hydroxygruppe, eine Alkoxygruppe von 1 bis 4 C-Atomen oder eine durch eine Sulfo-, Carboxy- oder Sulfatogruppe substituierte Alkoxygruppe von 1 bis 4 C-Atomen oder eine Sulfo- oder Carboxygruppe oder ein Halogenatom ist,
Y die Vinylgruppe oder eine Ethylgruppe ist, die in β-Stellung einen Substituenten enthält, der durch Alkali unter Bildung der Vinylgruppe eliminierbar ist,
n für die Zahl Null oder 1 steht (wobei im Falle von n gleich Null diese Gruppe ein Wasserstoffatom bedeutet) und
M die obengenannte Bedeutung besitzt.

2. Verbindung nach Anspruch 1, dadurch gekennzeichnet, daß R ein Wasserstoffatom oder die Methylgruppe ist.

3. Verbindung nach Anspruch 1 oder 2, dadurch gekennzeichnet, daß D¹ die 1,3- oder 1,4-Phenylengruppe ist, die durch eine Carboxygruppe oder durch 1 oder 2 Sulfogruppen substituiert sein kann.

4. Verbindung nach mindestens einem der Ansprüche 1 bis 3, dadurch gekennzeichnet, daß D² eine Gruppe der allgemeinen Formel (2a) 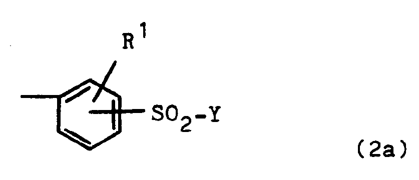 mit R¹ und Y der in Anspruch 1 genannten Bedeutung ist.

5. Verbindung nach Anspruch 4, dadurch gekennzeichnet, daß R¹ die Methyl-, Methoxy-, Ethoxy-, Carboxy- oder Sulfogruppe ist.

6. Verbindung nach Anspruch 4, dadurch gekennzeichnet, daß R¹ ein Wasserstoffatom ist.

7. Verbindung nach mindestens einem der Ansprüche 1 bis 6, dadurch gekennzeichnet, daß die Gruppe -SO₂-Y in Formel (2a) in meta- oder para-Stellung zur freien Bindung an den Benzolkern gebunden ist.

8. Verbindung nach mindestens einem der Ansprüche 1 bis 7, dadurch gekennzeichnet, daß Y und Y¹ unabhängig voneinander jedes die Vinylgruppe, die β-Chlorethyl-, β-Thiosulfatoethyl- oder β-Sulfatoethyl-Gruppe bedeuten.

9. Verbindung nach mindestens einem der Ansprüche 1 bis 7, dadurch gekennzeichnet, daß Y¹ die β-Chlorethyl-, β-Sulfatoethyl- oder β-Thiosulfatoethyl-Gruppe bedeutet.

10. Verbindung nach mindestens einem der Ansprüche 1 bis 7 und 9, dadurch gekennzeichnet, daß Y die β-Sulfatoethyl-Gruppe ist.

11. Verbindung nach Anspruch 1 entsprechend der allgemeinen Formel (1a) 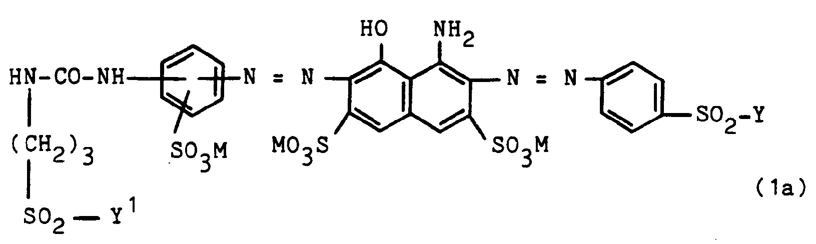 in welcher M, Y¹ und Y die in Anspruch 1 genannten Bedeutungen haben.

12. Verbindung nach Anspruch 11, dadurch gekennzeichnet, daß Y¹ die β-Chlorethyl-, β-Sulfatoethyl- oder β-Thiosulfatoethyl-Gruppe ist.

13. Verbindung nach Anspruch 11 oder 12, dadurch gekennzeichnet, daß Y die β-Sulfatoethyl-Gruppe ist.

14. Verfahren zur Herstellung einer Disazoverbindung von Anspruch 1, dadurch gekennzeichnet, daß man eine Verbindung der allgemeinen Formel (3) 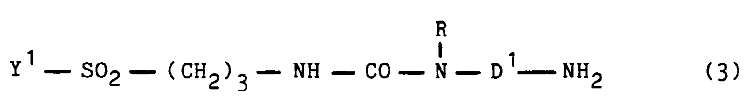 in welcher Y¹, R und D¹ die in Anspruch 1 genannten Bedeutungen haben, diazotiert und mit einer Verbindung der allgemeinen Formel (4) 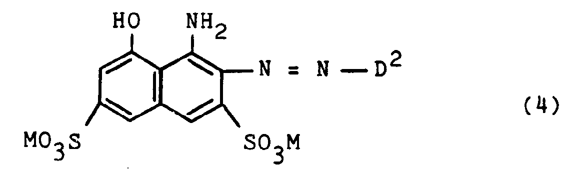 in welcher M und D² die in Anspruch 1 genannten Bedeutungen haben, kuppelt,
oder daß man eine Verbindung der allgemeinen Formel (5) 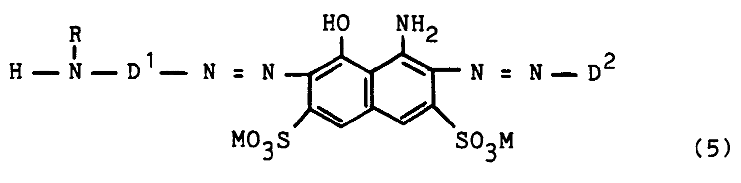 in welcher R, D¹, M und D² die in Anspruch 1 genannten Bedeutungen haben, mit einer Isocyanatverbindung der allgemeinen Formel (6)
Y¹ - SO₂ - (CH₂)₃- NCO (6)
in welcher Y¹ die in Anspruch 1 gennante Bedeutung besitzt, umsetzt.

15. Verwendung eines Farbstoffes von mindestens einem der Ansprüche 1 bis 13 zum Färben und Bedrucken von hydroxy- und/oder carbonamidgruppenhaltigem Material, insbesondere Fasermaterial.

16. Verfahren zum Färben und Bedrucken von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff einen Farbstoff von mindestens einem der Ansprüche 1 bis 13 verwendet.

## Patentansprüche (Patentansprüche für folgende(n) Vertragsstaat(en): ES)

1. Verfahren zur Herstellung einer Disazoverbindung entsprechend der allgemeinen Formel (1) 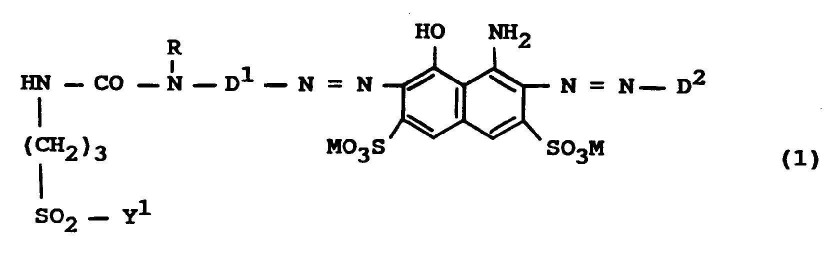 in welcher bedeuten:
D¹ ist ein Phenylenrest, der durch 1 oder 2 Substituenten aus der Gruppe Alkyl von 1 bis 4 C-Atomen, Alkoxy von 1 bis 4 C-Atomen, Chlor, Carboxy und Sulfo substituiert sein kann, oder ist ein Naphthylenrest, der durch eine Sulfogruppe substituiert sein kann,
R ist ein Wasserstoffatom oder eine Alkylgruppe von 1 bis 4 C-Atomen, die durch 1 oder 2 Substituenten aus der Gruppe Hydroxy, Sulfo, Carboxy, Sulfato und Phosphato substituiert sein kann;
Y¹ ist die Vinylgruppe oder eine Ethylgruppe, die in β-Stellung einen Substituenten enthält, der durch Alkali unter Bildung der Vinylgruppe eliminierbar ist;
M ist ein Wasserstoffatom oder ein Alkalimetall;
D² ist eine Gruppe der allgemeinen Formel (2a), (2b) oder (2c) 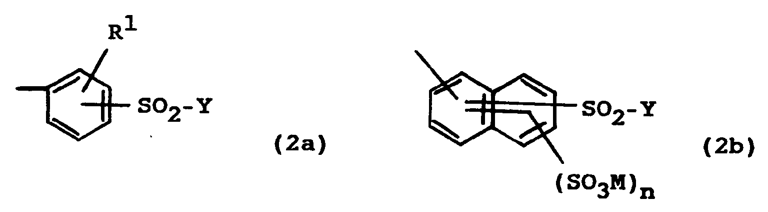 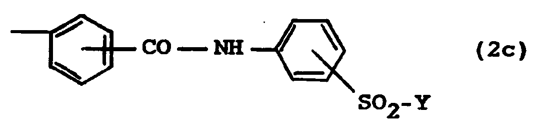
in welchen
R¹ ein Wasserstoffatom, die Cyangruppe, eine Alkylgruppe von 1 bis 4 C-Atomen oder eine durch eine Sulfo-, Carboxy- oder Sulfatogruppe substituierte Alkylgruppe von 1 bis 4 C-Atomen oder eine Hydroxygruppe, eine Alkoxygruppe von 1 bis 4 C-Atomen oder eine durch eine Sulfo-, Carboxy- oder Sulfatogruppe substituierte Alkoxygruppe von 1 bis 4 C-Atomen oder eine Sulfo- oder Carboxygruppe oder ein Halogenatom ist,
Y die Vinylgruppe oder eine Ethylgruppe ist, die in β-Stellung einen Substituenten enthält, der durch Alkali unter Bildung der Vinylgruppe eliminierbar ist,
n für die Zahl Null oder 1 steht (wobei im Falle von n gleich Null diese Gruppe ein Wasserstoffatom bedeutet) und
M die obengenannte Bedeutung besitzt,
dadurch gekennzeichnet, daß man eine Verbindung der allgemeinen Formel (3) 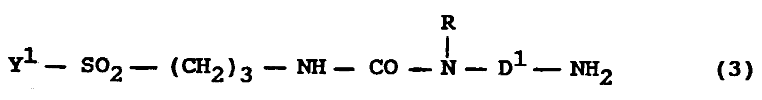 in welcher Y¹, R und D¹ die obengenannten Bedeutungen haben, diazotiert und mit einer Verbindung der allgemeinen Formel (4) 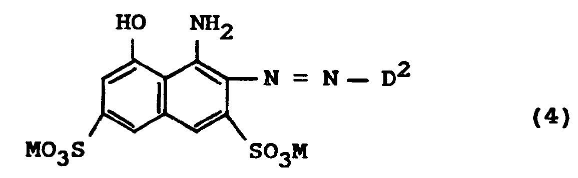 in welcher M und D² die obengenannten Bedeutungen haben, kuppelt,
oder daß man eine Verbindung der allgemeinen Formel (5) 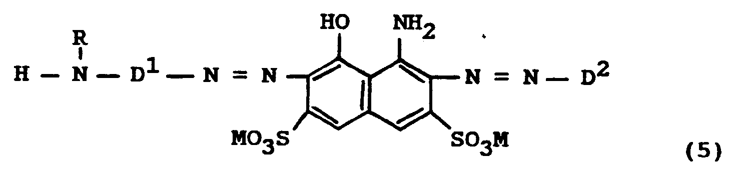 in welcher R, D¹, H und D² die obengenannten Bedeutungen haben, mit einer Isocyanatverbindung der allgemeinen Formel (6)
Y¹ - SO₂ - (CH₂)₃ - NCO (6)
in welcher Y¹ die in Anspruch 1 gennante Bedeutung besitzt, umsetzt.

2. Verfahren nach Anspruch 1, dadurch gekennzeichnet, daß R ein Wasserstoffatom oder die Methylgruppe ist.

3. Verfahren nach Anspruch 1 oder 2, dadurch gekennzeichnet, daß D¹ die 1,3- oder 1,4-Phenylengruppe ist, die durch eine Carboxygruppe oder durch 1 oder 2 Sulfogruppen substituiert sein kann.

4. Verfahren nach mindestens einem der Ansprüche 1 bis 3, dadurch gekennzeichnet, daß D² eine Gruppe der allgemeinen Formel (2a) 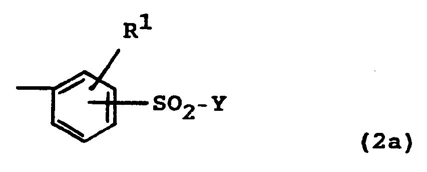 mit R¹ und Y der in Anspruch 1 genannten Bedeutung ist.

5. Verfahren nach Anspruch 4, dadurch gekennzeichnet, daß R¹ die Methyl -, Methoxy-, Ethoxy- , Carboxy- oder Sulfogruppe ist.

6. Verfahren nach Anspruch 4, dadurch gekennzeichnet, daß R¹ ein Wasserstoffatom ist.

7. Verfahren nach mindestens einem der Ansprüche 1 bis 6, dadurch gekennzeichnet, daß die Gruppe -SO₂-Y in Formel (2a) in meta- oder para-Stellung zur freien Bindung an den Benzolkern gebunden ist.

8. Verfahren nach mindestens einem der Ansprüche 1 bis 7, dadurch gekennzeichnet, daß Y und Y¹ unabhängig voneinander jedes die Vinylgruppe, die β-Chlorethyl-, β-Thiosulfatoethyl- oder β-Sulfatoethyl-Gruppe bedeuten.

9. Verfahren nach mindestens einem der Ansprüche 1 bis 7, dadurch gekennzeichnet, daß Y¹ die β-Chlorethyl-, β-Sulfatoethyl- oder β-Thiosulfatoethyl-Gruppe bedeutet.

10. Verfahren nach mindestens einem der Ansprüche 1 bis 7 und 9, dadurch gekennzeichnet, daß Y die β-Sulfatoethyl-Gruppe ist.

11. Verfahren nach Anspruch 1, dadurch gekennzeichnet, daß die Verbindung der Formel (1) eine Verbindung entsprechend der allgemeinen Formel (1a) 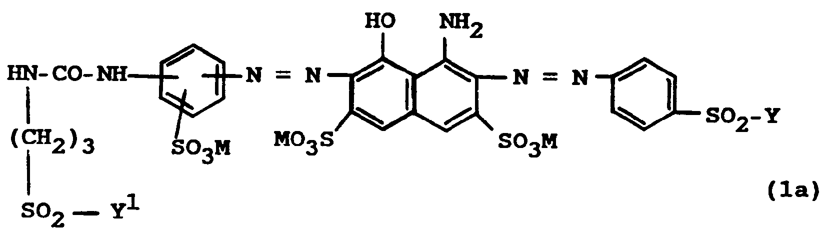 ist, in welcher M, Y¹ und Y die in Anspruch 1 genannten Bedeutungen haben.

12. Verfahren nach Anspruch 11, dadurch gekennzeichnet, daß Y¹ die β-Chlorethyl-, β-Sulfatoethyl- oder β-Thiosulfatoethyl-Gruppe ist.

13. Verfahren nach Anspruch 11 oder 12, dadurch gekennzeichnet, daß Y die β-Sulfatoethyl-Gruppe ist.

14. Verwendung eines Farbstoffes herstellbar nach mindestens einem der Ansprüche 1 bis 13 zum Färben und Bedrucken von hydroxy- und/oder carbonamidgruppenhaltigem Material, insbesondere Fasermaterial.

15. Verfahren zum Färben und Bedrucken von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff einen Farbstoff herstellbar nach mindestens einem der Ansprüche 1 bis 13 verwendet.

## Claims (Claims for the following Contracting State(s): BE, CH, DE, FR, GB, IT, LI)

1. A disazo compound of the formula (1) 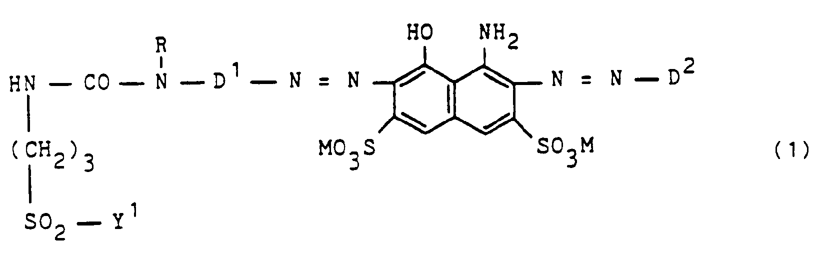 in which the symbols have the following meanings:
D¹ is a phenylene radical, which can be substituted by 1 or 2 substituents from the group comprising alkyl of 1 to 4 carbon atoms, alkoxy of 1 to 4 carbon atoms, chlorine, carboxyl and sulfo, or is a naphthylene radical, which can be substituted by a sulfo group;
R is a hydrogen atom or an alkyl group of 1 to 4 carbon atoms, which can be substituted by 1 or 2 substituents from the group comprising hydroxyl, sulfo, carboxyl, sulfato and phosphato;
Y¹ is a vinyl group or an ethyl group containing a substituent in the β-position which can be eliminated by alkali with the formation of a vinyl group;
M is a hydrogen atom or an alkali metal;
D² is a group of the formula (2a) (2b) or (2c) 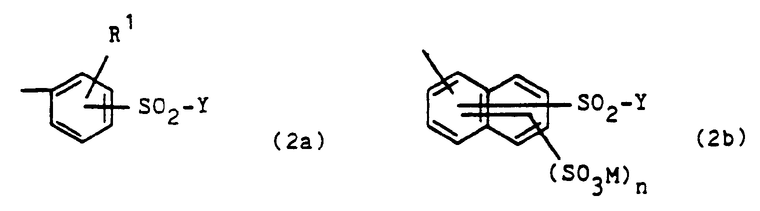 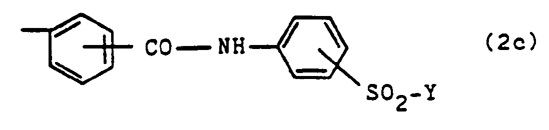
in which
R¹ is a hydrogen atom, a cyano group, an alkyl group of 1 to 4 carbon atoms, or an alkyl group of 1 to 4 carbon atoms substituted by a sulfo, carboxyl or sulfato group, or a hydroxyl group, an alkoxy group of 1 to 4 carbon atoms, or an alkoxy group of 1 to 4 carbon atoms substituted by a sulfo, carboxyl or sulfato group, or a sulfo or carboxyl group or a halogen atom,
Y is a vinyl group or an ethyl group containing a substituent in the β-position which can be eliminated by alkali with the formation of a vinyl group,
n is the number zero or 1 (in which in the case where n is zero this group is a hydrogen atom) and
M has the abovementioned meaning.

2. A compound as claimed in claim 1, wherein R is a hydrogen atom or a methyl group.

3. A compound as claimed in claim 1 or 2, wherein D¹ is a 1,3- or 1,4-phenylene group which can be substituted by a carboxyl group or by 1 or 2 sulfo groups.

4. A compound as claimed in at least one of claims 1 to 3, wherein D² is a group of the formula (2a) 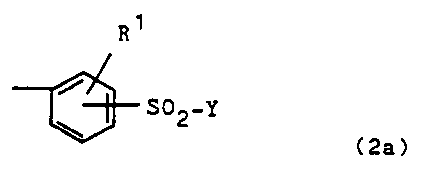 where R¹ and Y have the meaning mentioned in claim 1.

5. A compound as claimed in claim 4, wherein R¹ is a methyl, methoxy, ethoxy, carboxyl or sulfo group.

6. A compound as claimed in claim 4, wherein R¹ is a hydrogen atom.

7. A compound as claimed in at least one of claims 1 to 6, wherein the group -SO₂-Y in formula (2a) is bound to the benzene ring in the meta or para position relative to the free bond.

8. A compound as claimed in at least one of claims 1 to 7, wherein Y and Y¹, independently of one another, are each a vinyl group, or a β-chloroethyl, β-thiosulfatoethyl or β-sulfatoethyl group.

9. A compound as claimed in at least one of claims 1 to 7, wherein Y¹ is a β-chloroathyl, β-sulfatoethyl or β-thio-sulfatoethyl group.

10. A compound as claimed in at least one of claims 1 to 7 and 9, wherein Y is a β-sulfatoethyl group.

11. A compound as claimed in claim 1 of the formula (1a) 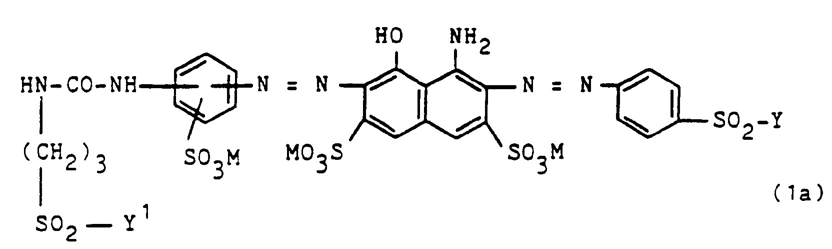 in which M, Y¹ and Y have the meanings mentioned in claim 1.

12. A compound as claimed in claim 11, wherein Y¹ is a β-chloroethyl, β-sulfatoethyl or β-thiosulfatoethyl group.

13. A compound as claimed in claim 11 or 12, wherein Y is a β-sulfatoethyl group.

14. A process for the preparation of a disazo compound of claim 1, which comprises diazotizing a compound of the formula (3) 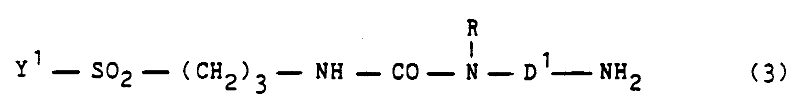 in which Y¹, R and D¹ have the meanings mentioned in claim 1 and coupling the product with a compound of the formula (4) 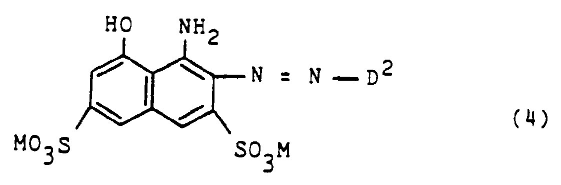 in which M and D² have the meanings mentioned in claim 1, or reacting a compound of the formula (5) 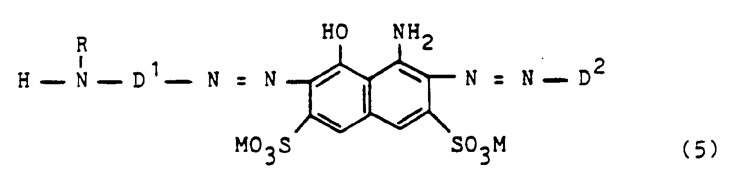 in which R, D¹, M and D² have the meanings mentioned in claim 1 with an isocyanate compound of the formula (6)
Y¹ - SO₂ - (CH₂)₃- NCO (6)
in which Y¹ has the meaning mentioned in claim 1.

15. Use of a dye of at least one of claims 1 to 13 for the dyeing and printing of hydroxyl- and/or carboxamido-containing material, in particular fiber material.

16. A process for the dyeing and printing of hydroxyl- and/or carboxamido-containing material, preferably fiber material, in which a dye is applied to the material or incorporated in the material and the dye is fixed on or in the material by means of heat or by means of an alkaline agent or by means of heat and by means of an alkaline agent, wherein the dye used is a dye of at least one of claims 1 to 13.

## Claims (Claims for the following Contracting State(s): ES)

1. A process for the preparation of a disazo compound of the formula (1) 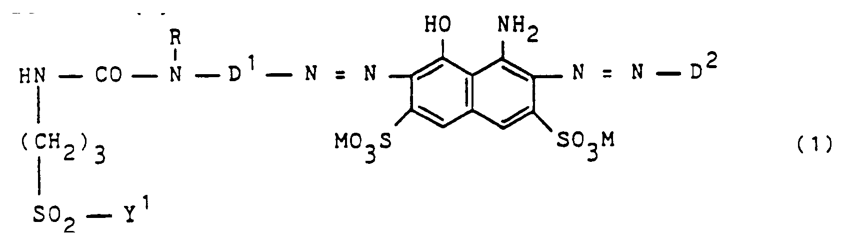 in which the symbols have the following meanings:
D¹ is a phenylene radical, which can be substituted by 1 or 2 substituents from the group comprising alkyl of 1 to 4 carbon atoms, alkoxy of 1 to 4 carbon atoms, chlorine, carboxyl and sulfo, or is a naphthylene radical, which can be substituted by a sulfo group;
R is a hydrogen atom or an alkyl group of 1 to 4 carbon atoms, which can be substituted by 1 or 2 substituents from the group comprising hydroxyl, sulfo, carboxyl, sulfato and phosphato;
Y¹ is a vinyl group or an ethyl group containing a substituent in the β-position which can be eliminated by alkali with the formation of a vinyl group;
M is a hydrogen atom or an alkali metal;
D² is a group of the formula (2a), (2b) or (2c) 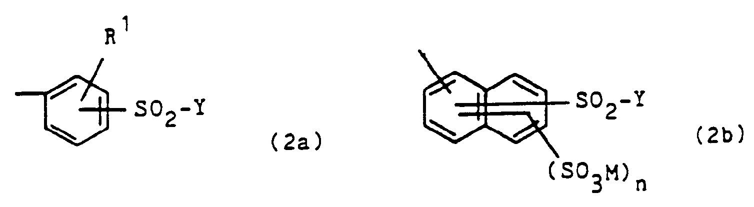 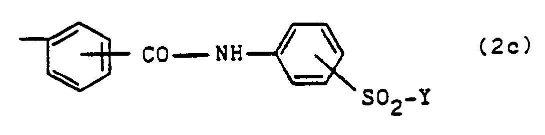
in which
R¹ is a hydrogen atom, a cyano group, an alkyl group of 1 to 4 carbon atoms, or an alkyl group of 1 to 4 carbon atoms substituted by a sulfo, carboxyl or sulfato group, or a hydroxyl group, an alkoxy group of 1 to 4 carbon atoms, or an alkoxy group of 1 to 4 carbon atoms substituted by a sulfo, carboxyl or sulfato group, or a sulfo or carboxyl group or a halogen atom,
Y is a vinyl group or an ethyl group containing a substituent in the β-position which can be eliminated by alkali with the formation of a vinyl group,
n is the number zero or 1 (in which in the case where n is zero this group is a hydrogen atom) and
M has the abovementioned meaning,
which comprises diazotizing a compound of the formula (3) 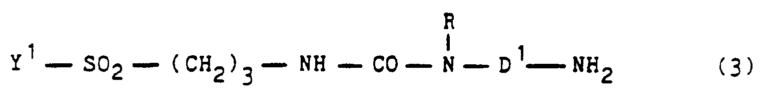 in which Y¹, R and D¹ have the abovementioned meanings and coupling the product with a compound of the formula (4) 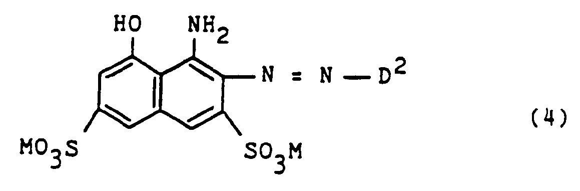 in which M and D² have the abovementioned meanings, or reacting a compound of the formula (5) 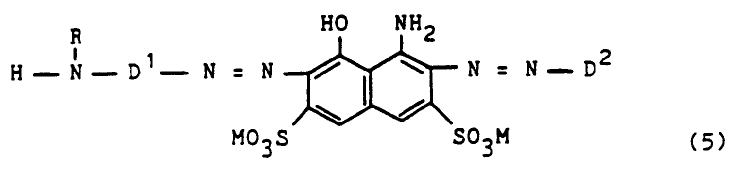 in which R, D¹, M and D² have the abovementioned meanings with an isocyanate compound of the formula (6)
Y¹ - SO₂ - (CH₂)₃ - NCO (6)
in which Y¹ has the above-mentioned meaning.

2. The process as claimed in claim 1, wherein R is a hydrogen atom or a methyl group.

3. The process as claimed in claim 1 or 2, wherein D¹ is a 1,3-or 1,4-phenylene group which can be substituted by a carboxyl group or by 1 or 2 sulfo groups.

4. The process as claimed in at least one of claims 1 to 3, wherein D² is a group of the formula (2a) 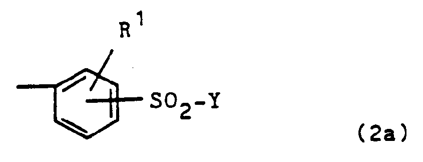 where R¹ and Y have the meaning mentioned in claim 1.

5. The process as claimed in claim 4, wherein R¹ is a methyl, methoxy, ethoxy, carboxyl or sulfo group.

6. The process as claimed in claim 4, wherein R¹ is a hydrogen atom.

7. The process as claimed in at least one of claims 1 to 6, wherein the group -SO₂-Y in formula (2a) is bound to the benzene ring in the meta or para position relative to the free bond.

8. The process as claimed in at least one of claims 1 to 7, wherein Y and Y¹, independently of one another, are each a vinyl group, or a β-chloroethyl, β-thioaulfatoethyl or β-sulfatoethyl group.

9. The process as claimed in at least one of claims 1 to 7, wherein Y¹ is a β-chloroethyl, β-sulfatoethyl or β-thiosulfatoethyl group.

10. The process as claimed in at least one of claims 1 to 7 and 9, wherein Y is a β-sulfatoathyl group.

11. The process as claimed in claim 1 wherein the compound of the formula (1) is a compound of the formula (1a) 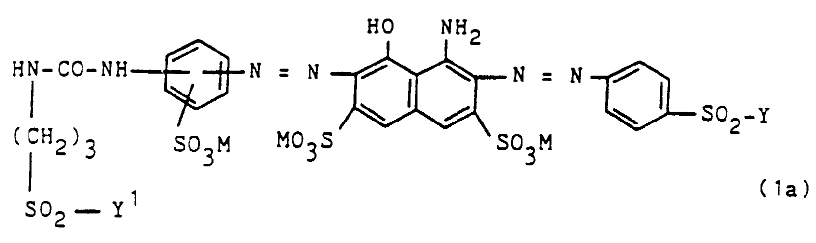 in which M, Y¹ and Y have the meanings mentioned in claim 1.

12. The process as claimed in claim 11, wherein Y¹ is a β-chloroethyl, β-sulfatoethyl or β-thiosulfatoathyl group.

13. The process as claimed in claim 11 or 12, wherein Y is a β-sulfatoethyl group.

14. Use of a dye which can be prepared as claimed in at least one of claims 1 to 13 for the dyeing and printing of hydroxyl- and/or carboxamido-containing material, in particular fiber material.

15. The process for the dyeing and printing of hydroxyl- and/or carboxamido-containing material, preferably fiber material, in which a dye is applied to the material or incorporated in the material and the dye is fixed on or in the material by means of heat or by means of an alkaline agent or by means of heat and by means of an alkaline agent, wherein the dye used is a dye which can be prepared as claimed in at least one of claims 1 to 13.

## Revendications (Revendications pour l'(les) Etat(s) contractant(s) suivant(s): BE, CH, DE, FR, GB, IT, LI)

1. Composé disazoïque répondant à la formule générale (I) 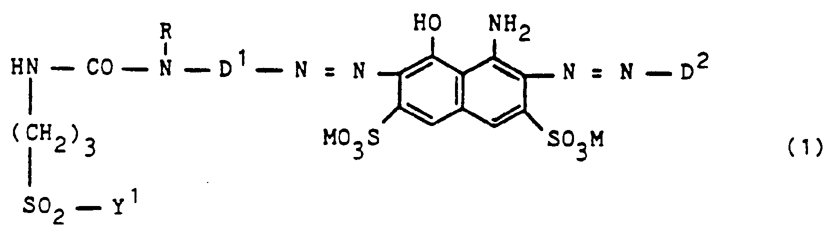 dans laquelle :
D¹ représente un reste phénylène, qui peut être substitué par un ou deux substituants choisis parmi un groupe alkyle ayant 1 à 4 atomes de carbone, alcoxy ayant 1 à 4 atomes de carbone, chloro, carboxy et sulfo, ou bien D¹ représente un reste naphtylène qui peut être substitué par un groupe sulfo;
R représente un atome d'hydrogène ou un groupe alkyle ayant 1 à 4 atomes de carbone, qui peut être substitué par un ou deux substituants choisis parmi un groupe hydroxyle, sulfo, carboxy, sulfato et phosphato;
Y¹ représente le groupe vinyle ou un groupe éthyle, qui contient en position β un substituant pouvant être éliminé par une susbtance alcaline avec formation du groupe vinyle;
M représente un atome d'hydrogène ou un métal alcalin;
D² représente un groupe de formule générale (2a), (2b) ou (2c) 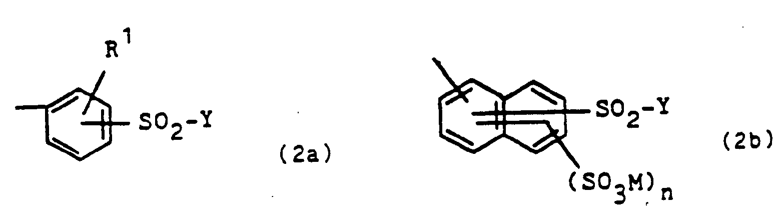 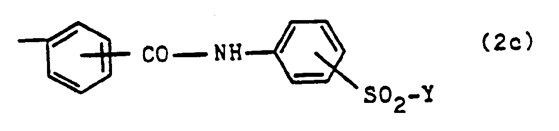 formules dans lesquelles
R¹ représente un atome d'hydrogène, le groupe cyano, un groupe alkyle ayant 1 à 4 atomes de carbone ou un groupe alkyle ayant 1 à 4 atomes de carbone qui est substitué par un groupe sulfo, carboxy ou sulfato, ou un groupe hydroxyle, un groupe alcoxy ayant 1 à 4 atomes de carbone ou un groupe alcoxy ayant 1 à 4 atomes de carbone substitué par un groupe sulfo, carboxy ou sulfato, ou un groupe sulfo ou carboxy ou un atome d'hydrogène ,
Y représente le groupe vinyle ou un groupe éthyle, qui contient en position βun substituant éliminable par une substance alcaline avec formation du groupe vinyle,
n est un nombre nul ou valant 1 (si n est nul, ce groupe représente un atome d'hydrogène), et
M a le sens précité.

2. Composé selon la revendication 1, caractérisé en ce que R représente un atome d'hydrogène ou le groupe méthyle.

3. Composé selon la revendication 1 ou 2, caractérisé en ce que D¹ représente le groupe 1,3- ou 1,4-phénylène, qui peut être substitué par un groupe carboxy ou par un ou deux groupes sulfo.

4. Composé selon au moins une des revendications 1 à 3, caractérisé en ce que D² est un groupe de formule générale (2a) 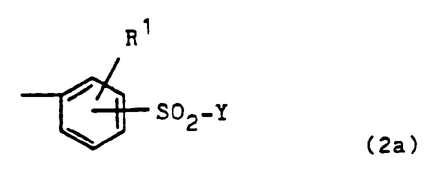 dans laquelle R¹ et Y ont le sens indiqué à la revendication 1.

5. Composé selon la revendication 4, caractérisé en ce que R¹ représente le groupe méthyle, méthoxy, éthoxy, carboxy ou sulfo.

6. Composé selon la revendication 4, caractérisé en ce que R¹ représente un atome d'hydrogène .

7. Composé selon l'un au moins des revendications 1 à 6, caractérisé en ce que, dans la formule (2a), le groupe -SO₂-Y se trouve en position méta ou para par rapport à la liaison libre fixée sur le noyau benzénique.

8. Composé selon l'une au moins des revendications 1 à 7, caractérisé en ce que Y et Y¹ représentent chacun, indépendamment l'un de l'autre, le groupe vinyle, le groupe β-chloréthyle, le groupe β-thiosulfatoéthyle ou β-sulfatoéthyle.

9. Composé selon une au moins des revendications 1 à 7, caractérisé en ce que Y¹ représente le groupe β-chloréthyle, β-sulfatoéthyle ou β-thiosulfatoéthytle.

10. Composé selon l'une au moins des revendications 1 à 7 et 9, caractérisé en ce que Y représente le groupe β-sulfatoéthyle.

11. Composé selon la revendication 1, répondant à la formule générale (1a) 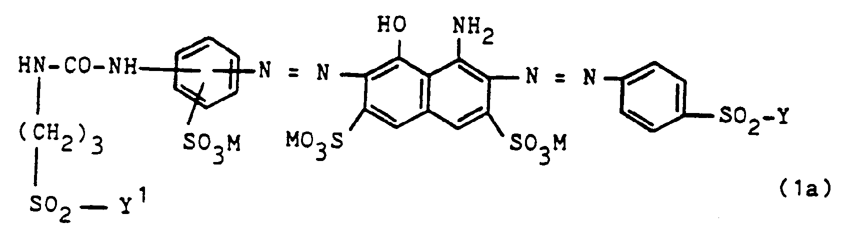 dans laquelle M, Y¹ et Y ont les sens indiqués à la revendication 1.

12. Composé selon la revendication 11, caractérisé en ce que Y¹ représente le groupe B-chloréthyle, β-sulfatoéthyle ou β-thiosulfatoéthyle.

13. Composé selon la revendication 11 ou 12, caractérisé en ce que Y représente le groupe β-sulfatoéthyle.

14. Procédé pour préparer un composé disazoïque selon la revendication 1, caractérisé en ce qu'on diazote un composé de formule générale (3) 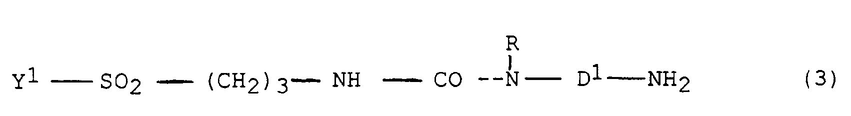 (dans laquelle Y¹, R et D¹ ont le sens indiqué à la revendication 1), et l'on copule avec un composé de formule générale (4) 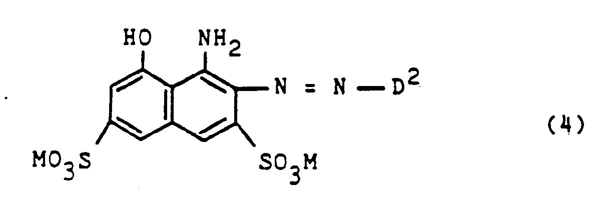 dans laquelle M et D² ont les sens indiqués à la revendication 1,
ou bien en ce qu'on fait réagir un composé de formule générale (5) 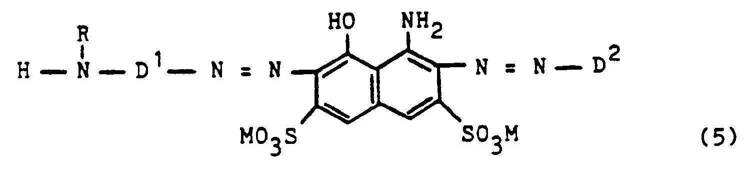 (dans laquelle R, D¹, M et D² ont les sens indiqués à la revendication 1) avec un isocyanate de formule générale (6)
Y¹ - SO₂ - (CH₂)₃- NCO (6)
dans laquelle Y¹ a le sens indiqué à la revendication 1.

15. Utilisation d'un colorant selon l'une au moins des revendications 1 à 13 pour teindre et imprimer de la matière, notamment de la matière fibreuse, contenant des groupes hydroxyles et/ou des groupes carboxamides.

16. Procédé pour teindre et imprimer de la matière, avantageuement de la matière fibreuse, contenant des groupes hydroxyles et/ou carboxamides, procédé selon lequel on applique un colorant sur la matière ou bien on introduit un colorant dans la matiére et l'on fixe le colorant sur ou dans la matière, à l'aide d'un chauffage ou à l'aide d'un agent à action alcaline ou à l'aide de la chaleur et à l'aide d'un agent à action alcaline, procédé caractérisé en ce qu'on utilise comme colorant un colorant selon l'une au moins des revendications 1 à 13.

## Revendications (Revendications pour l'(les) Etat(s) contractant(s) suivant(s): ES)

1. Procédé pour préparer un composé disazoïque répondant à la formule générale (1) 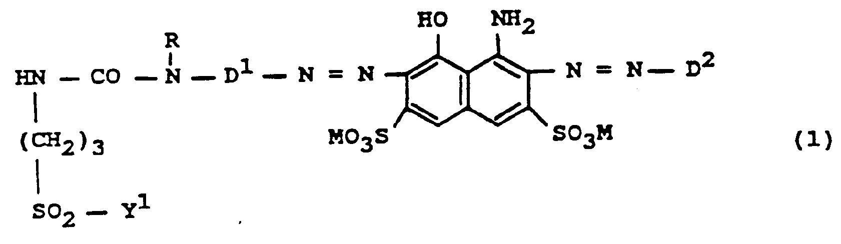 dans laquelle :
D¹ représente un reste phénylène, qui peut être substitué par un ou deux substituants choisis parmi un groupe alkyle ayant 1 à 4 atomes de carbone, alcoxy ayant 1 à 4 atomes de carbone, chloro, carboxy et sulfo, ou bien D¹ représente un reste naphtylène qui peut être substitué par un groupe sulfo;
R représente un atome d'hydrogène ou un groupe alkyle ayant 1 à 4 atomes de carbone, qui peut être substitué par un ou deux substituants choisis parmi un groupe hydroxyle, sulfo, carboxy, sulfato et phosphato;
Y¹ représente le groupe vinyle ou un groupe éthyle qui contient en position βun substituant pouvant être éliminé par une substance alcaline avec formation du groupe vinyle;
M représente un atome d'hydrogène ou un métal alcalin;
D² représente un groupe de formule générale (2a), (2b) ou (2c) : 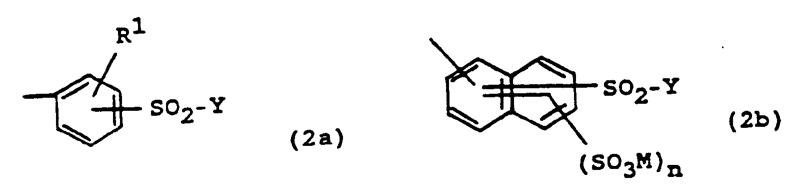 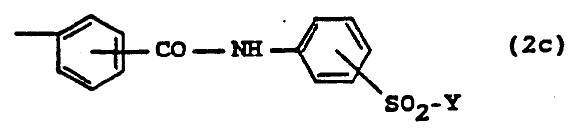 formules dans lesquelles
R¹ représente un atome d'hydrogène, le groupe cyano, un groupe alkyle ayant 1 à 4 atomes de carbone ou un groupe alkyle ayant 1 à 4 atomes de carbone qui est substitué par un groupe sulfo, carboxy ou sulfato, ou un groupe hydroxyle, un groupe alcoxy ayant 1 à 4 atomes de carbone ou un groupe alcoxy ayant 1 à 4 atomes de carbone substitué par un groupe sulfo, carboxy ou sulfato, ou un groupe sulfo ou carboxy ou un atome d'hydrogène ,
Y représente le groupe vinyle ou un groupe éthyle, qui contient en position βun substituant éliminable par une substance alcaline avec formation du groupe vinyle,
n est un nombre nul ou valant 1 (si n est nul, ce groupe représente un atome d'hydrogène), et
M a le sens précité.
procédé caractérisé en ce qu'on diazote un composé de formule générale (3) 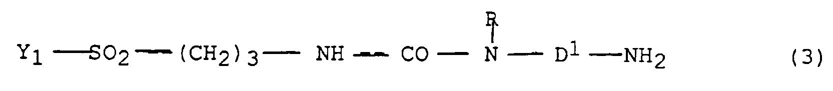 (dans laquelle Y¹, R et D¹ ont les sens précités) et l'on copule avec un composé de formule générale (4) 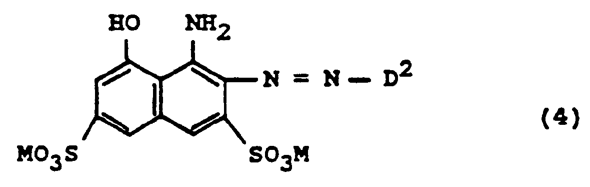 (dans laquelle M et D² ont les sens précités),
ou bien en ce qu'on fait réagir un composé de formule générale (5) 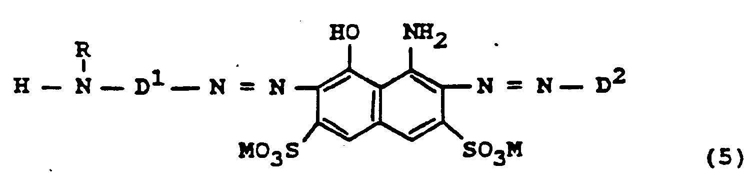 (dans laquelle R, D^{1,} M et D² ont les sens précités) avec un isocyanate de formule générale (6)
Y¹-SO₂-(CH₂)₃-NCO (6)
dans laquelle Y¹ a le sens indiqué ci-dessus dans la revendication 1.

2. Procédé selon la revendication 1, caractérisé en ce que R représente un atome d'hydrogène ou le groupe méthyle.

3. Procédé selon la revendication 1 ou 2, caractérisé en ce que D¹ représente le groupe 1,3- ou 1,4-phénylène, qui peut être substitué par un groupe carboxy ou par un ou deux groupes sulfo.

4. Procédé selon l'une au moins des revendications 1 à 3, caractérisé en ce que D² représente un groupe de formule générale (2a) 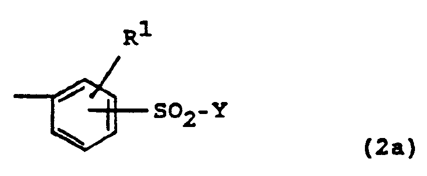 dans laquelle R¹ et Y ont le sens indiqué à la revendication 1.

5. Procédé selon la revendication 4, caractérisé en ce R¹ représente le groupe méthyle, méthoxy, éthoxy, carboxy ou sulfo.

6. Procédé selon la revendication 4, caractérisé en ce que R¹ représente un atome d'hydrogène.

7. Procédé selon l'une au moins des revendications 1 à 6, caractérisé en ce que le groupe -SO₂-Y est, dans la formule (2a), en position méta ou para par rapport à la liaison libre sur le noyau benzénique.

8. Procédé selon l'une au moins des revendications 1 à 7, caractérisé en ce que Y et Y¹ représentent chacun, indépendamment l'un de l'autre, le groupe vinyle, le groupe β-chloréthyle, le groupe β-thiosulfatoéthyle, ou le groupe β-sulfatoéthyle.

9. Procédé selon l'une au moins des revendications 1 à 7, caractérisé en ce que Y¹ représente le groupe β-chloréthyle, β-sulfatoéthyle ou β-thiosulfatoéthyle.

10. Procédé selon l'une au moins des revendications 1 à 7 et 9, caractérisé en ce que Y représente le groupe β-sulfatoéthyle.

11. Procédé selon la revendication 1, caractérisé en ce que le composé de formule (1) est un composé répondant à la formule générale (1a) 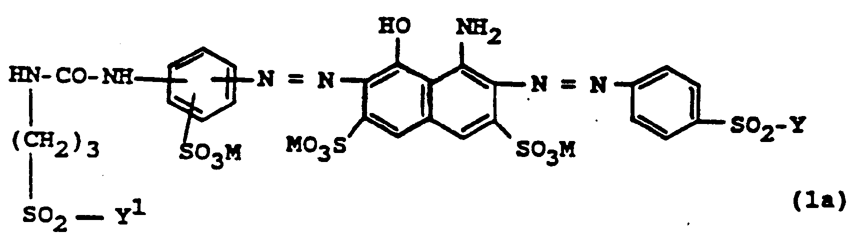 dans laquelle M, Y¹ et Y ont les sens indiqués à la revendication 1.

12. Procédé selon la revendication 11, caractérisé en ce que Y¹ représente le groupe β-chloréthyle, β-sulfatoéthyle ou β-thiosulfatoéthyle.

13. Composé selon la revendication 11 ou 12, caractérisé en ce que Y représente le groupe β-sulfatoéthyle.

14. Utilisation d'un colorant pouvant être préparé selon l'une au moins des revendications 1 à 13 pour teindre et imprimer de la matière, notamment de la matière fibreuse, contenant des groupes hydroxyles et/ou carboxamides.

15. Procédé pour teindre et imprimer de la matière, avantageusement de la matière fibreuse, contenant des groupes hydroxyles et/ou carboxamides, procédé selon lequel on applique sur la matière un colorant, ou bien on fait pénétrer dans la matière un colorant, et l'on fixe le colorant sur ou dans la matière, à l'aide de la chaleur ou à l'aide d'une substance à action alcaline ou à l'aide de la chaleur et d'une substance à action alcaline, procédé caractérisé en ce qu'on utilise comme colorant un colorant pouvant être préparé selon l'une au moins des revendications 1 à 13.
